# EUROPEAN PATENT SPECIFICATION

(11) **EP 1 257 441 B1**
(45) Date of publication and mention of the grant of the patent: **27.07.2005**
(21) Application number: 01900857.2
(22) Date of filing: 04.01.2001
(51) Int. Cl.: B60R 21/16

(54) **METHOD OF FOLDING AN AIRBAG**
VERFAHREN ZUM FALTEN EINES GASSACKES
PROCEDE DE PLIAGE D'UN COUSSIN GONFLABLE DE SECURITE

(30) Priority: 23.02.2000 US 510821
(43) Date of publication of application: 20.11.2002
(73) Proprietor: Key Safety Systems, Inc., Sterling Heights, Michigan 48314 (US)
(72) Inventor: KALANDEK, Bruce, Dearborn, MI 48124 (US); WIPERSURAMONTON, Paul, Rochester, MI 48307 (US); SCHIERBEEK, Jamie, Washington, MI 48095 (US)
(74) Representative: Gislon, Gabriele
(86) International application number: PCT/US2001/000199
(87) International publication number: WO 2001/062556

(56) References cited:
- EP-A- 0 787 673
- US-A- 5 636 860
- US-A- 5 765 863
- US-A- 5 899 490

## Description

The invention relates a method of folding an airbag deployed in a side impact crash.

Many side impact airbags are installed within the outer portion or wing of a vehicle seat or fascia of a door adjacent the seat. The airbag must tear through the seat's covering material (or door fascia) and position itself to protect the vehicle occupant during a side impact crash. The positioning of the airbag within the seat and the construction of the covering material effects the way the airbag deploys. The method of folding affects the trajectory of the deploying airbag.

US 5 899 490 A describes a side airbag folded according to the preamble of claim 1.

One problem for side impact airbags is improved interaction with an out-of-position vehicle occupant, that is, a vehicle occupant that is not in the normal, upright seated position. While adults will generally be seated upright, children are often seated in unusual positions.

There is provided in accordance with the present invention an airbag and airbag module that utilize an improved method of folding the airbag such that the head chamber of the airbag is deployed in a more vertical direction, thereby reducing any forward or longitudinal component of force exerted by the deploying airbag on the vehicle occupant and more particularly on a vehicle occupant that is out of position.

### Brief Description of the Drawings

Fig. 1 is an exploded view of an airbag, inflator and manifold assembly.
Figs. 1a and 1b respectively show an optional diverter panel and a separator panel for the airbag.
Fig. 2 is similar to Fig. 1; however, the inflator has been moved inside the neck of the airbag and the airbag flaps positioned about the inflator.
Fig. 2a is a cross-sectional view at line 2a-2a of Fig. 2.
Fig. 2b is a cross-sectional view at line 2b-2b.
Fig. 3 is a plan view of an optional folding jig.
Fig. 4 shows the airbag of Fig. 2 positioned on the folding jig of Fig. 3.
Fig. 5 illustrates the airbag after it has been folded over a first fold line.
Fig. 5a is a side view of an airbag on the jig of Fig. 3.
Figs. 6 and 6a are top and side views of an intermediate process step in the folding of the airbag.
Figs. 7, 7a and 8 show further intermediate process steps in the folding of the airbag.
Figs. 9 and 9a illustrate another process step.
Figs. 10 and 10a show another step of the process.
Figs. 11 and 11a are top and side views of a folded airbag.
Fig. 12 shows an isolated view of a tearable airbag cover.
Fig. 13 shows an airbag module installed within a vehicle seat.

### Detailed Description of the Invention

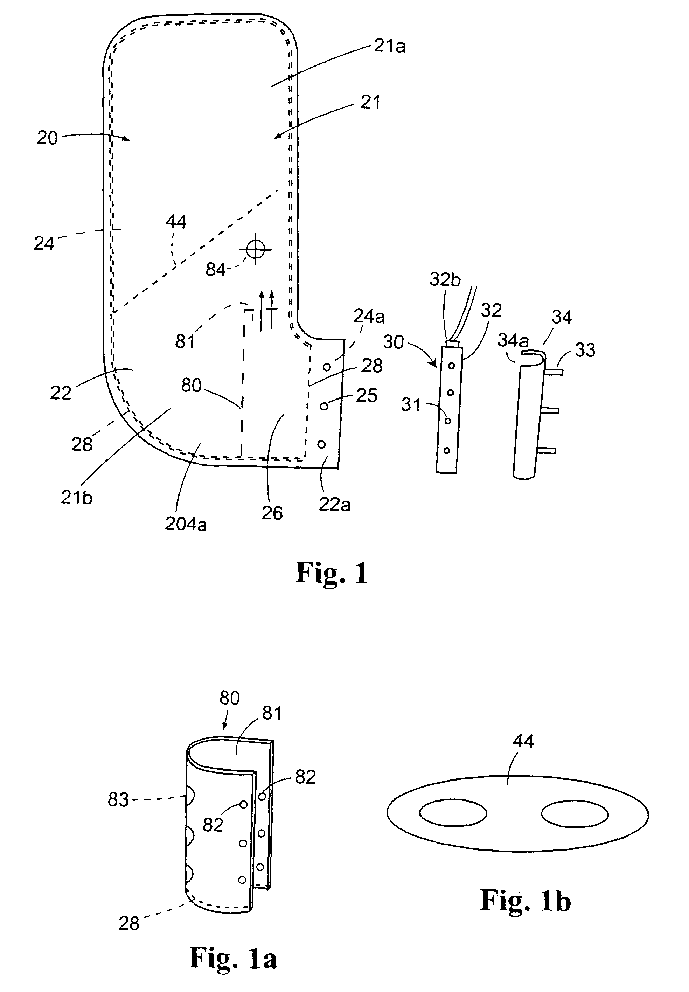

Fig. 1 illustrates an airbag 20 formed by joining two main panels 22, 24 together. These panels comprise at least a first or outer panel 22 and second or inner 24 panel of material. The inner panel is not visible in Fig. 1 as it is below the outer panel. The inner and outer designation of the panels refers to the placement of the panels of the deployed airbag in relation to a side of the vehicle, that is, the outer panel is adjacent the vehicle side while the inner panel is adjacent the vehicle occupant. The panels of the airbag are made from woven nylon or polyester or a plastic film. The airbag 20 includes a neck portion 26 into which an inflator subassembly 30 can be placed.

In one embodiment the inflator subassembly 30 comprises an inflator 32 with a plurality of gas exit openings 31 for supplying inflation gas to the airbag. The subassembly 30 may include a U-shaped manifold 34. The manifold 34 can have a full wall as taught in US 5 765 867 or an open side 34a and a plurality of mounting studs 33. The inflator 32 is placed in the manifold through the open side and is supported and secured in the manifold 34 by means for fastening such as a strap or wire or band clamp (not shown) that envelopes the manifold and inflator. In an alternate configuration, the studs 33 extend directly from the inflator. In this case the manifold would most probably be eliminated.

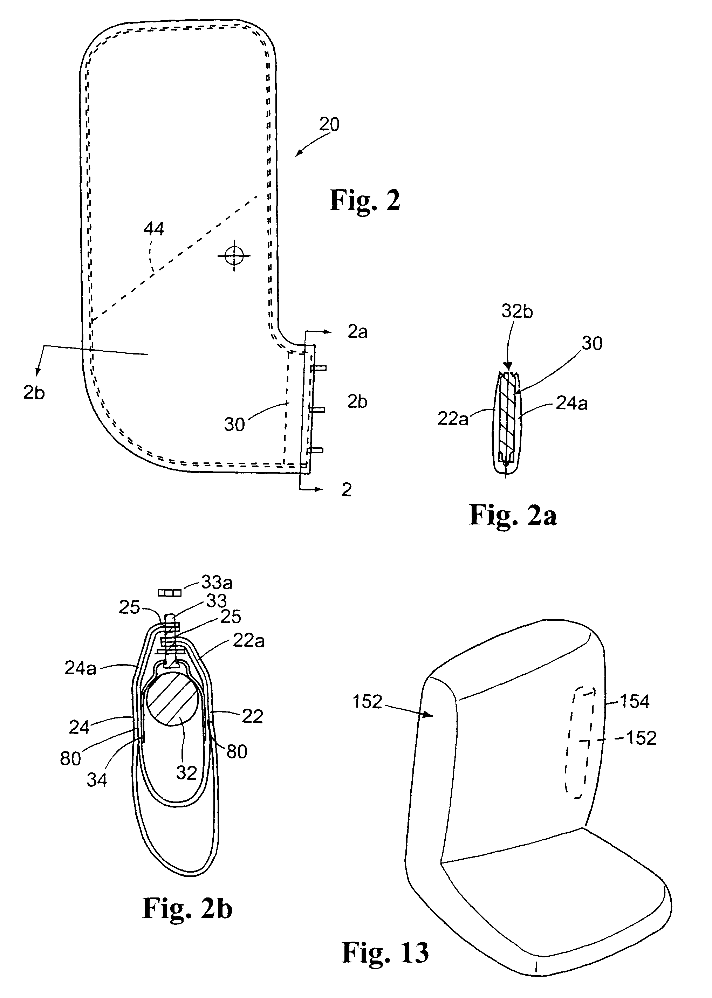

Fig. 1 shows two panels joined together along a seam 28 that extends about most of the periphery of the airbag. In the illustrated embodiment the seam 28 is a sewn seam. The panel may alternatively be joined by heat welding or gluing the panels together. Each of the panels 22, 24, in the vicinity of the neck 26, includes a respective flap 22a, 24a and each flap has a plurality of openings 25 therethrough. The number of openings 25 corresponds to the number of studs 33 in the subassembly 30. The inflator, or in this case the subassembly, is positioned inside (Fig. 2) the neck 26, between the flaps 22a, 24a. The flaps are placed in an overlapping relationship about the rear of the manifold 34 (Fig. 2a) with each stud 33 extending through corresponding openings 25 in each flap.

Fig. 2 differs from Fig. 1 in that the inflator is shown within the neck 26 of the airbag with the flaps around the manifold 34. In this configuration the top of the inflator 32 extends slightly from the neck 26. This relationship is exemplary of an inflator with an electrical connector 32b (Fig. 2a) located in the inflator's top end and easy access to this electrical connector is desired. The inflator can be totally enveloped by the neck of the airbag where an associated electrical wire is passed through a small opening in an obscure location on the airbag.

The inflatable portion 21 of the airbag 20 is sufficiently long such that, when it is inflated, an upper portion 21a of the airbag provides protection for a vehicle occupant's head while a lower portion 21b of the airbag provides protection for the vehicle occupant's thorax. Alternatively, the airbag may be constructed with a separator panel 44, which divides the inflatable portion 21 into a head cushioning chamber 21a and a thorax cushioning chamber 21b. The separator panel shown in Fig. 1b has one or more openings 46 therethrough to permit gas to flow from the thorax cushioning chamber to the head cushioning chamber 21. In the preferred embodiment the separator panel 44 has two oval openings therethrough, the size of each opening being about 44x110 mm. The airbag 20 may additionally include a diverter panel 80, shown in detail in Fig. 1a, that is positioned proximate the neck and sewn to the periphery of the airbag. When installed in the airbag, the diverter panel 80 is folded and defines, in cooperation with adjacent portions of the panels 22, 24, a passage with an open top portion 81. This panel 80 can have a plurality of mounting openings 82 therethrough that are aligned with the openings 25 in the airbag panels 22, 24. These openings 82 permit the diverter panel to be placed in an overlapping relationship about the manifold and studs. The lower portion of the diverter panel 80 is sewn to a respective side panel 22, 24 along part of seam 28 or using a separate seam. The diverter panel 80 changes the direction of flow of the inflation gas from the inflator 30 such that a greater portion of the inflation gases is directed upwardly through the airbag via the open top 81 of the diverter panel. The direction of gas flow exiting the inflator is typically horizontal, at least in relation to Fig. 2. The outboard panel 22 may have a discrete opening or vent therethrough (about 33 mm in diameter for example). In the preferred embodiment this vent 84 is located generally above the open top 81 of the passage formed by the diverter panel. Optionally the diverter panel 80 may include another set of openings 83 (shown in phantom line). These openings permit a portion of the inflation gas to flow directly into the lower portions of the thorax chamber 21b.

The following describes a method for folding the airbag 20. To facilitate the folding process the airbag is positioned on a work surface such as the top of a table or a separate folding apparatus, pallet or jig 200. The use of a jig or folding apparatus will speed the folding process and result in greater uniformity from airbag to airbag. The folding apparatus 200 comprises a removable, shaped pallet or work surface 202. Alternatively, this folding apparatus can have the exterior dimensions of the jig 202 painted on a table. The lower portion 204 of the work pallet 202 is shaped identical to the shape of the lower portion 204a (Fig. 1) of the airbag 20.

A corner of the apparatus 200 includes a first holding fixture 206 that has a trough or depression 208 oriented to match the orientation of the inflator in the laid-out airbag. The trough is shaped to conform to the shape of the inflator. The edges of the first holding fixture 206, forming the trough, may include grooves (not shown) into which a respective stud is placed, thereby insuring the proper orientation of the inflator. The apparatus 200 includes an upwardly extending member (the extension) 210, which is used as a guide for an intermediate folding step. A shoulder 212 extends from the upwardly extending member 210 and the apparatus includes an associated guide line 214 formed on or marked upon the pallet 202.

The pallet 202 may be made from any suitable material such as Plexiglas, wood, aluminum, etc. that is placed upon another work surface. The shape of the apparatus 200 can be drawn on a work surface if desired (eliminating the need for the pallet) and the first holding member incorporated in the work surface.

The apparatus 200 includes a second holding fixture such as a manually operated, hold-down clamp 216 with a vertically movable clamping arm 218, that is only diagrammatically shown as it is well known.

The airbag 20 with the inflator installed therein is positioned atop the folding apparatus 200. The parts of the airbag surrounding the inflator assembly 30 (as well as the assembly 30) are placed and secured within the first holding fixture 206. The outer panel 22 is shown located above the lower panel. The airbag being folded will be used in a right-hand installation. The process described below can be used for the left side seating position. In this case the orientation and construction of the fixture 200 is reversed.

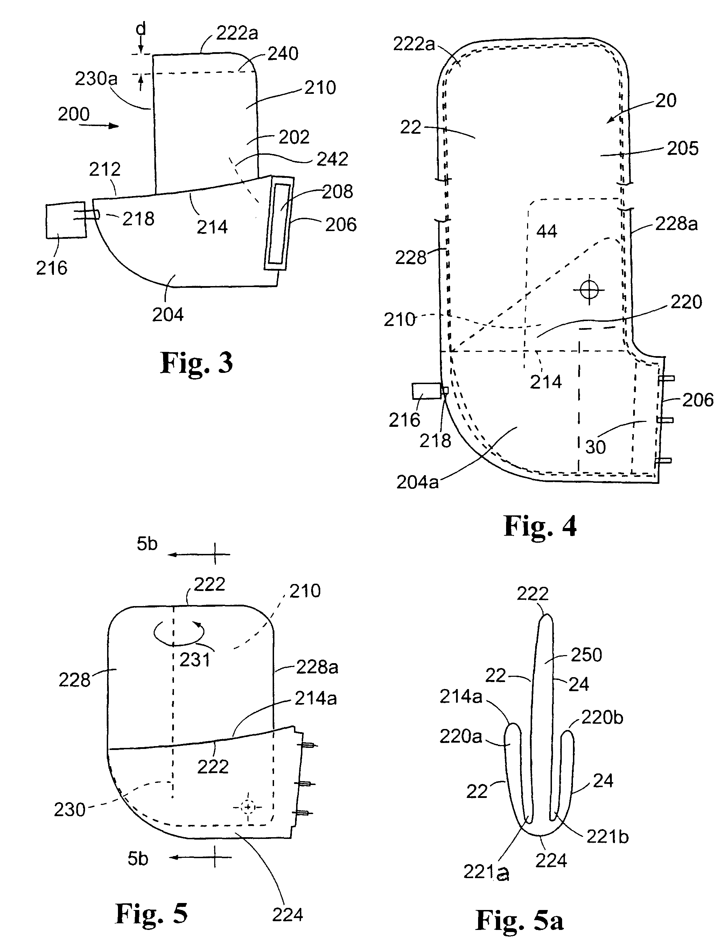

The lower portion 204a of the airbag 20 is then aligned to the similarly shaped portion 204 of the fixture or jig 200 and the hold-down fixture 216 is manipulated to cause its arm or clamping mechanism 218 to clamp an outer marginal portion of the airbag 20 in place. The upper portions 205 of the airbag 30 are stretched out and laid flat on the work surface as shown in Fig. 4. Portions 204, 210, 212 and 214 of the folding apparatus 200 are shown in phantom lines beneath the laid-out airbag.

Thereafter, the operator, who is manually folding the airbag or corresponding folding machine, lifts a portion of the top panel (the outer panel 22 in Fig. 4) slightly above the desired fold or tuck line 214a identified as parts 212 and 214 of the pallet 202. The tuck line 214a is located in the upper panel (as illustrated in Fig. 4) which in this configuration is outer panel 22. The portion of the panel that is grabbed and lifted is identified by numeral 220 in Fig. 4. Subsequently, the lower portion 204a of the outer panel is lifted away from the inner panel 24 and that portion of the outer panel 22. Then a portion of the outer panel 22, just immediately above the guide line 214 of the fixture, or just above the tuck line 214a of the panel 22, is tucked inwardly upon itself forming a front tuck 220a. As the airbag material is pushed toward the bottom of the airbag a rear tuck 220b is formed. During this operation the tucked-in portion of the outer panel is pushed down to the bottom 224 of the airbag, forming respective lower tucks or folds 221a, 221b. The resulting configuration is shown in Figs. 5 and 5a. The step of tucking that part of the top or outer panel (at the tuck line) inward also pulls down and lowers fabric that was located at the very top 222 of the airbag.

In this configuration, a now shortened top 222 of the airbag has been aligned with the top 22a of the extending portion 210 of the folding apparatus or jig 200 (or pallet or outline 202). If the topmost fabric of the airbag has not been brought in line with the top 22a of the pallet, this indicates that the outer panel 22 has not been tucked in correctly and this step must be repeated. Fig. 5a diagrammatically shows the position of the inner and outer panels after the above tuck or fold operation. The separator and diverter panels are not shown in Fig. 5a.

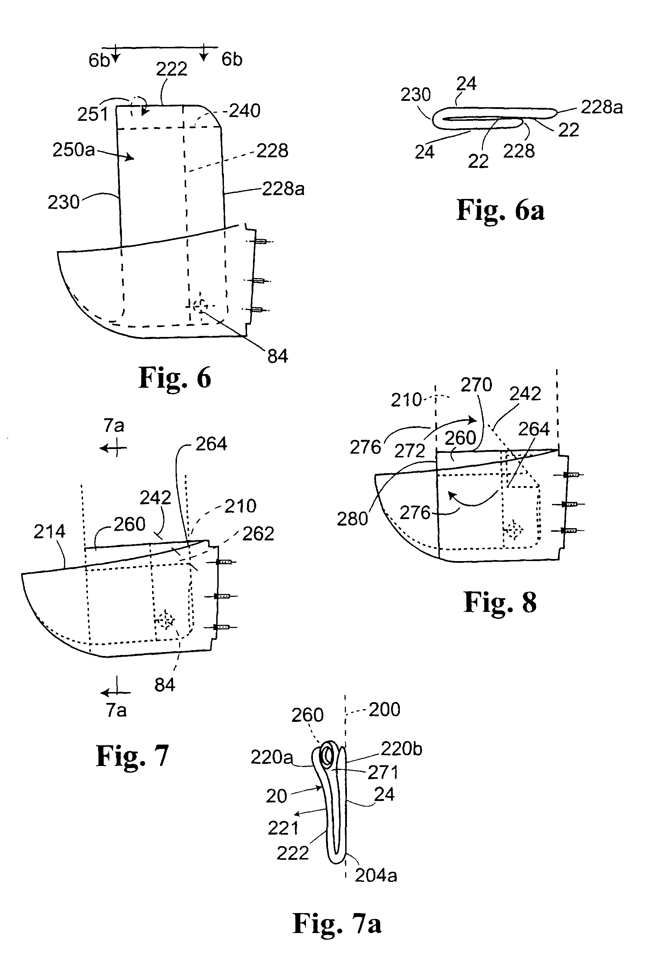

With the airbag in the configuration shown in Fig. 5, the width of the airbag from front side 228 to the rear side 228a is still wider than the width of the narrow portion 10 of the folding fixture 200 (which is used as a guide) which represent the desired width of this portion of the airbag. The width of the upper portion of the airbag will be narrowed to make it conform to the width of the pallet or fixture. This is accomplished by defining a fold line 230 which is coextensive (Fig. 5) with a corresponding edge 230a of the fixture 200. The part of the airbag that is to be folded is the extending upper part 250 of the airbag. This upper part 250 of the airbag extends from that part of the airbag that has just been tucked into the bottom of the airbag to the now shortened top 222. Arrow 231 of Fig. 5 shows how the material is moved to achieve this next fold about fold line 230. The forwardmost rear edge 22a of the extending portion 250 of the airbag is folded about the fold line 230. More particularly, this material is moved forward (out of the plane of the paper), such that after being folded, portions of the outer panel 22 face each other (Fig. 6a). If the airbag is viewed along the fold line 230 from the top of the airbag (Fig. 5) to accomplish this fold the forward edge 228 is rotated in a counter-clockwise manner about the fold line.

As used herein and in the claims, this type of fold is referred to as an "outward" fold. This type of fold is imported in the following context. The outer panel 22, when the airbag is inflated, is located adjacent the side of the vehicle. As the airbag is inflating the now narrowed top 250a inflates upwardly and as the airbag continues to inflate, the front edge 228 will rotate in a clockwise manner. In essence the front edge moves away from the vehicle occupant, toward the side of the vehicle and is then positioned rearwardly (in the configuration of Fig 3). This motion keeps the unfolding portion of the airbag away from the vehicle occupant, especially an out-of-position vehicle occupant.

Fig. 6 is a plan view of the airbag 20 after it has been folded over fold line 230. The upper part of the airbag has been narrowed and conforms to the shape of the upper part of the pallet 202. Fig. 6a is an isolated end view showing only the top of the head chamber of the airbag. The folding apparatus 200 or work surface is not shown in either Fig. 6 or 6a.

In Fig. 3 the folding apparatus or fixture 200 includes a reference or measurement line 240 that extends across the top of the extending portion 210. This reference or measurement line 240 is located at dimension, d, from the top 222a of the fixture 200 and identifies the preferred dimension (width) of subsequent folds to be introduced into the now narrowed top 250a (Fig. 6) of the partially folded airbag. The apparatus 200 includes a second reference line 242 (Figs. 3 and 7) which is used as a guide for a subsequent fold. The top 222 of the airbag (which now lies coextensive with or superimposed on the top 222a of the fixture 200) is folded about the measurement line 240. Subsequently, the top portion 250a is again folded over itself about four or five times.

As the narrowed top 250a of the airbag is folded over, it begins to resemble a cylinder 260, which in this case is rather flat, as the panels of the airbag are thin and pliable. Arrow 251 in Fig. 6 shows the direction of the above folds (in relation to Fig. 6, the material is folded back-to-front). These folds are referred to as outer or outward folds as the material is folded on the outer panel. The top 250a is folded over a predetermined number of times (typically four or five times) and the resulting cylinder, or fabric roll, 260 will be positioned generally underneath the outer panel 22 at the original tuck line 214 (also tuck 211a).

In Figs. 7 and 7a the top of the fabric cylinder 260 is in line with the tuck line 214 but it is permissible that the top of the cylinder be slightly above or below the tuck line 214a. In the various figures the tuck line 214, 214a extends downwardly at a slight angle. This orientation will vary with the specific airbag. The tuck line can extend perpendicularly from the location of the inflator or vary somewhat from this orientation.

As the rolled or folded top portion 250a of the airbag inflates, the various folds forming the fabric roll 260 unfold. By virtue of using an outer fold or roll, the fabric roll is positioned away from the vehicle occupant to avoid unnecessary contact with the vehicle occupant. The extending portion 210 of the pallet 202 or folding apparatus 200 is only partially shown in Fig. 7. In Fig. 7 the cylinder of fabric, or fabric roll, 260 is positioned adjacent the top of the inflator assembly 30 and generally extends perpendicularly from this assembly.

A portion 262 of the fabric cylinder closest to the inflator assembly by numeral is used in the next folding step. This portion 262 of the fabric roll 260 is positioned above and passes over the angled, second reference line 242. A corner 264 located in the top-right part of the fabric roll 260, near the inflator assembly 30, is brought over the adjacent material of the roll and is folded about the fold line 242.

The top of the fabric roll 260 is labeled as 270 and the left end as 272. The fabric roll 260 is located at the top of a cavity 271 created by the lower portions of the inner and outer panels 24, 22 respectively and the initial tucks 220a,b. With the inflator assembly 30 preferably still secured to the fixture 206 and with the hold-down clamp 216 still holding the lower portion 204 of the airbag to the fixture, the spacing or distance between the panels 221, 24 is increased. This is simply done by raising the outer panel 22 slightly in the direction of arrow 22. With the outer panel 22 elevated, the fabric roll 260 is repositioned with the cavity.

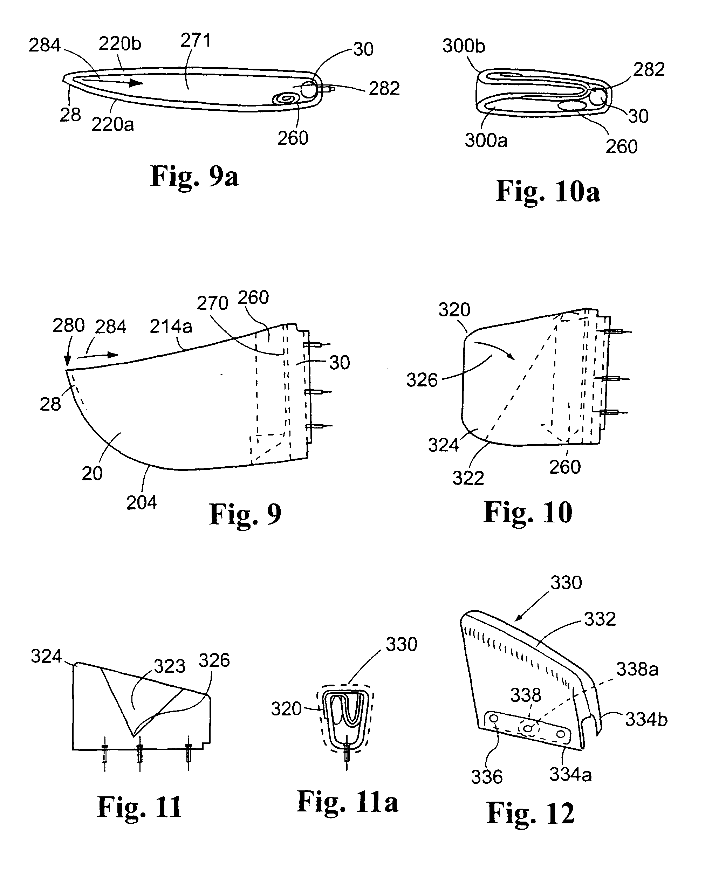

The fabric roll, starting with the configuration shown in Fig. 8, which includes the folded-over corner 264, is rotated clockwise 90° as shown by arrow 276. As the fabric roll is rotated, it is manipulated so that the folded corner is pointing at the bottom of the airbag. The top 270 of the fabric roll 260 is against the inflator assembly 30. The end 272 is near the top of the inflator and the fabric roll is located against the inside of the outer panel 22. In Figs. 9 and 9a any other fabric at the bottom of the airbag is positioned on the side of the fabric roll opposite the outer panel.

When the airbag is initially inflated, the lower portions of the airbag inflate generally at the lower portion of the tucks 220a, 220b. As more inflation gas enters the airbag, the gas will migrate into the lower portion of the fabric roll and move the fabric roll from its position shown in Fig. 9 to that shown in Fig. 7. In Fig. 9a the fabric roll 70 is enveloped by first and second walls of material formed by tucks 220a, 200b. The walls of material extend from a portion of seam 28. Thereafter, the point 280 is grabbed and moved to point 282 as shown in Fig. 9a. To accomplish this, it might be easier to disconnect the airbag and inflator from the fixture 200, but this is not necessary. Arrow 284 shows the direction of motion of point 280 at the far corner of the partially folded airbag as it will be moved to point 282 adjacent the inflator subassembly and fabric roll 260. Moving the end 280 of the airbag and placing it generally at the inflator creates two additional folds or tucks 300a, 300b in the inner and outer panels. Figs. 10 and 10a show the airbag after this step.

One of the corners, such as the top left corner 320 in Fig. 10, is folded about another fold line 322. This fold line runs from the top of the fabric roll to the vicinity of the corner 324. An arrow 326 shows the direction of this fold. The resulting configuration after the corner 322, which now forms a flap 323, has been folded over line 324 is shown in Fig. 11. The folded airbag has a generally trapezoidal shape. The airbag shown in Fig. 11 is enveloped with a flexible, tearable cover 330. The cover 330 is shown in Fig. 12. The cover, in the preferred embodiment of the invention, is made of a thin (.25 mm), flexible, urethane plastic sheet that is formed to have a shape that is generally that of the folded airbag. The cover 330 includes a weakened region 332. This weakened zone can be achieved by a series of perforations in the cover material or making the cover locally very thin. The cover holds the airbag in its folded configuration. As the airbag is inflated it rips the cover at the weakened region 338.

The cover is preferably made of a clear plastic so that the folded airbag is visible. The cover 330 includes two flaps 334a, 334b. Each of the flaps includes a like number of mounting openings 336 spaced in the manner as openings 25. To prevent the thin cover from tearing at the openings 336, a reinforcement layer 338 is secured to the flaps. This layer can be a single band as illustrated or separate circles of reinforcement as shown by dotted line 338a. The reinforcement layer, which can be urethane, can be attached by heat welding, sewing or any procedure that is compatible with the material. After the airbag is positioned in the cover 330, the flaps 334a, 224b are manipulated about the extending mounting studs 33 of the manifold or inflator.

Fig. 13 shows an airbag module 150 installed in a vehicle seat 152. The module comprises an airbag 20, inflator 30 and manifold 34. Upon activation of the inflator, the airbag begins to inflate and rips through the seat 152 at a preferred location such as at an outboard, forward seam 154 in the seat back.

## Claims

1. A method of folding an airbag (20), the airbag having facing first (22) and second (24) panels that are joined together, a portion of each panel cooperating to form a neck that is adapted to receive an inflator (32),
with the first (22) and second (24) panels generally flat on a work surface with the first panel (22) overlaying the second panel (24),
and a generally horizontal first fold or tuck line 214a that extends across the first panel (22); the method **characterised by** the steps of:
(a) forming a double tuck in both the first (22) and second panel (24), the first tuck located on a portion of the first (22) and second panels (24) generally at the first tuck line (214a) and the second tucks 221a, 221b generally located near the bottom of the airbag (20); the tucking of the panels (22, 24) lowering the height of the airbag (20) in relation to its laid-out configuration in step a as well is its relating to the first tuck line (214a);
(b) reducing the width of that portion of the airbag (20) that extends from the second tuck to the top (222) of the airbag (20);
(c) folding or rolling the reduced width portion toward the first fold line (214a), the folding forming a fabric roll (260), the fabric roll (260) after the rolling or folding of this step being positioned generally in line with the first fold line (214a);
(d) manipulating the fabric roll (260) so that lies generally parallel to the inflator (32) and generally positioned between the tucks formed in the panels (22, 24) as a result of step a;
(e) reducing a first dimension of the partially folded airbag (20), the first dimension measured from the location of the inflator (32) to an opposing side of the partially folded airbag (20).
(f) folding over a portion of the airbag (20) to reduce a second dimension of the airbag (20) measured from the inflator (32) to a side opposite the inflator (32) to obtain a generally trapezoidal configuration for the folded airbag (20).

## Patentansprüche

1. Verfahren zum Falten eines Airbags (20), wobei der Airbag gegenüberliegende erste (22) und zweite (24) Tafeln, die miteinander verbunden werden, wobei von jeder Tafel ein Abschnitt zusammenwirkt, um einen Hals zu bilden, der dafür geeignet ist, eine Aufblasvorrichtung (32) aufzunehmen, wobei sich die erste (22) und die zweite (24) Tafel allgemein flach auf einer Arbeitsfläche befinden, wobei die erste Tafel (22) über der zweiten Tafel (24) liegt, und eine allgemein horizontale erste Falz- oder Einschlaglinie (214a) hat, die sich über die erste Tafel (22) erstreckt, wobei das Verfahren durch die folgenden Schritte **gekennzeichnet** ist:
(a) Herstellen eines doppelten Einschlags sowohl in der ersten (22) als auch der zweiten Tafel (24), wobei der erste Einschlag an einem Abschnitt der ersten (22) und der zweiten Tafel (24) allgemein an der ersten Einschlaglinie (214a) angeordnet wird und die zweiten Umschläge (221a, 221b) allgemein nahe dem Unterteil des Airbags (20) angeordnet werden, wobei das Einschlagen der Tafeln (22, 24) die Höhe des Airbags (20) im Verhältnis zu seiner ausgelegten Konfiguration in Schritt a ebenso verringert wie in seinem Verhältnis zur ersten Einschlaglinie (214a),
(b) Verringern der Breite desjenigen Abschnitts des Airbags (20), der sich vom zweiten Einschlag zum Oberteil (222) des Airbags (20) erstreckt,
(c) Falten oder Rollen des Abschnitts mit verringerter Breite zur ersten Falzlinie (214a) hin, wobei das Falten eine Stoffrolle (260) bildet, wobei die Stoffrolle (260) nach dem Rollen oder Falten dieses Schritts allgemein in einer Linie mit der ersten Falzlinie (214a) angeordnet wird,
(d) Verschieben der Stoffrolle (260) so, daß sie allgemein parallel zur Aufblasvorrichtung (32) liegt und allgemein zwischen den als Ergebnis von Schritt a in den Tafeln (22, 24) gebildeten Einschlägen angeordnet wird,
(e) Verringern einer ersten Abmessung des teilweise gefalteten Airbags (20), wobei die erste Abmessung vom Ort der Aufblasvorrichtung (32) bis zu einer gegenüberliegenden Seite des teilweise gefalteten Airbags (20) gemessen wird,
(f) Umklappen eines Abschnitts des Airbags (20), um eine zweite Abmessung des Airbags (20) zu verringern, gemessen von der Aufblasvorrichtung (32) bis zu einer Seite gegenüber der Aufblasvorrichtung (32), um eine allgemein trapezförmige Konfiguration für den gefalteten Airbag (20) zu erreichen.

## Revendications

1. Procédé de pliage d'un coussin d'air (20), le coussin d'air comportant des premier (22) et deuxième (24) panneaux opposés assemblés, une partie de chaque panneau coopérant pour former un col destiné à recevoir un dispositif de gonflement (32), les premier (22) et deuxième (24) panneaux étant généralement agencés à plat sur une surface de travail, le premier panneau (22) étant superposé au deuxième panneau (24); et une première ligne de pliage (214a) généralement horizontale s'étendant à travers le premier panneau (22); le procédé comprenant les étapes ci-dessous:
(a) formation d'un double pli dans les premier (22) et deuxième (24) panneaux, le premier pli étant agencé sur une partie des premier (22) et deuxième (24) panneaux, en général au niveau de la première ligne de pliage (214a), les deuxièmes plis (221a, 221b) étant en général agencés près de la partie inférieure du coussin d'air (20); le pliage des panneaux (22, 24) abaissant la hauteur du coussin d'air (20) par rapport à sa configuration étalée dans l'étape a ainsi que par rapport à la première ligne de pliage (214a);
(b) réduction de la largeur de la partie du coussin d'air (20) s'étendant à partir du deuxième pli vers la partie supérieure (222) du coussin d'air (20);
(c) pliage ou enroulement de la partie à largeur réduite vers la première ligne de pliage (214a); le pliage formant un rouleau de tissu (260), le rouleau de tissu (260) étant en général aligné avec la première ligne de pliage (214a) après l'enroulement ou le pliage de cette étape;
(d) déplacement du rouleau de tissu (260), de sorte à l'agencer en général parallèlement au dispositif de gonflement (32) et à la positionner en général entre les plis formés dans les panneaux (22, 24) par suite de l'étape (a);
(e) réduction d'une première dimension du coussin d'air partiellement plié (20), la première dimension étant mesurée de l'emplacement du dispositif de gonflement (32) vers un côté opposé du coussin d'air partiellement plié (20);
(f) repliage d'une partie du coussin d'air (20) pour réduire une deuxième dimension du coussin d'air (20), mesurée de l'emplacement du dispositif de gonflement (32) vers un côté opposé au dispositif de gonflement (32) pour établir une configuration généralement trapézoïdale du coussin d'air plié (20).
